# EUROPEAN PATENT SPECIFICATION

(11) **EP 1 128 985 B1**
(45) Date of publication and mention of the grant of the patent: **12.05.2004**
(21) Application number: 99956341.4
(22) Date of filing: 12.11.1999
(51) Int. Cl.: B60R 1/06

(54) **VEHICLE PROVIDED WITH A REAR-VIEW MIRROR**
KRAFTFAHRZEUG MIT EINEM RÜCKBLICKSPIEGEL
VEHICULE EQUIPE D'UN RETROVISEUR

(30) Priority: 12.11.1998 NL 1010534
(43) Date of publication of application: 05.09.2001
(73) Proprietor: Marketing & Adviesbureau Remy B.V., 1405 EV Bussum (NL)
(72) Inventor: DE CONINCK, Jacobus, Johannes, NL-8244 ED Lelystad (NL); VAN WAES, Wilbert, Albert, Marie, NL-1405 EV Bussum (NL)
(74) Representative: van Westenbrugge, Andries
(86) International application number: PCT/NL1999/000693
(87) International publication number: WO 2000/029259

(56) References cited:
- EP-A- 0 666 196
- FR-A- 2 647 066

## Description

The present invention relates to a vehicle according to the preample of claim 1.

Such a mirror is known from DE 9005537.3 U1.

In particular in the case of higher vehicles such as lorries and buses, but also in the case of delivery vans, visibility is limited next to the vehicle on the right-hand (or left-hand) side, owing to the high position in which the driver sits and the fact that there may be no side windows. For motorcyclists, cyclists, pedestrians, other vulnerable traffic participants and even complete vehicles and/or obstacles may be lower in height than the height of the side window of the cab, with the result that the driver is not aware of these vulnerable traffic participants or obstacles. This applies to a much more considerable extent to persons who are directly alongside the driver's cab on the right of the vehicle. Without a rear-view mirror, there is no way the driver can be aware of these persons.

It is usual in the prior art to fit one or more rear-view mirrors on both the right-hand and the left-hand front door, thereby increasing the driver's range of vision.

So long as the vehicle is and remains moving considerably faster than the other road users whose path is being crossed, there are no problems. However, as soon as the speed differences become less great or are not constant, dangerous situations can occur. This happens particularly on the approach to a road junction, roundabout and/or traffic lights for which the vehicle concerned reduces speed or is waiting, or when it is changing lane both inside and outside built-up areas. During this waiting period cyclists, motor cars and the like can move unnoticed alongside the vehicle and move into a position slightly past the range of vision provided by the mirrors fixed on the door. If both the vehicle and the cyclist or other vulnerable traffic participants accelerate simultaneously at approximately the same speed immediately after the traffic light changes to green, and the vehicle is crossing the path of the cyclist and/or other vulnerable traffic participants, the driver of the vehicle cannot see the cyclist. The same applies in situations in which the vehicle is temporarily travelling at a considerably slower speed than the cyclist or other road .user and subsequently crosses his path. For the Netherlands and the EC, statutory standard 71/127/EEC and 85/205/EEC and the subsequent additions thereto apply to this situation. Despite the application of these regulations, a considerable range which is not covered by the mirrors continues to exist. In German Utility Model 9005537 this problem is partially solved by fitting a mirror on the front side of a vehicle. The mirror surface of this mirror lies completely outside the boundary of the body, in other words, it projects fully to the right or left at the side of the vehicle. Furthermore, this mirror is fitted at a considerable distance (it is estimated at least 25 cm) from the front side of the vehicle.

One of the disadvantages of this is that such a mirror is very susceptible to damage. Furthermore, whilst there is a good view of the area between lorry and road, there is a poor view of the front part alongside the lorry, so that a large part of the blind spot continues to exist.

It is the object of the invention to eliminate these disadvantages and to increase the area of vision of the driver of the vehicle in such a way that in these situations also the fellow road user can be seen, especially at the time when the vehicle driver is intending to cross the path of that fellow road user.

This object is achieved in the case of a vehicle of the type described above having the features of claim 1.

Owing to the fact that the mirror according to the invention does not project so far at the side, said mirror is less susceptible to damage. Furthermore, it has surprisingly been found that the blind spot in the lateral direction is considerably reduced as a result and is substantially removed. The range of vision of the driver is considerably increased as a result.

In particular as regards cyclists, who together with their cycle are of considerable length, the driver will either see the part of the cycle which extends past the front side of the vehicle by looking straight out through the windscreen or will see the cyclist through the mirror according to the invention. This increases traffic safety considerably. In this case at least one third of the mirror, for example, projects beyond the boundary of the vehicle.

According to a particularly advantageous embodiment of the invention, approximately half of the mirror surface is situated inside the boundary of the vehicle and half is outside it.

Since the mirror in question is important only for the detection of fellow road users in the lane to the right and also to the left of the vehicle, the mirror need not be designed in such a way that distances and the like can be estimated in the optimum way with such a mirror. This makes it possible to design the mirror in such a way that the range of vision of the driver is increased in the optimum way. For instance, it is possible to make the mirror surface curved, in order to optimize the range of vision. Other adaptations of the mirror surface are also possible. More particularly, the mirror can be (a)spherical or convex.

It is important for the view through the windscreen to be restricted as little as possible by the mirror according to the invention. For that purpose, it is proposed that part of the mirror surface be situated below the lower boundary line between body and windscreen. For as a result of the distance between the mirror and the front side of body or windscreen and as a result of the eyes of the driver being at a slightly higher position, he is able to make beneficial use of that part of the mirror surface which, viewed in the vertical direction, is situated below the lower dividing line between windscreen and front side of the cab of the vehicle.

According to an advantageous embodiment of the invention, the mirror is fitted in front of the windscreen at a distance of 3-20 cm from the frontside of the body. This makes the mirror less susceptible to damage also in the direction of travel. In many cases the mirror will be situated within the "bumper plane".

According to another advantageous embodiment, for example, only one third, and more particularly one quarter, of the mirror surface projects beyond the vehicle. This makes the mirror less susceptible to damage and interferes less with the aerodynamic properties of the vehicle. If a third of the mirror projects beyond the periphery of the vehicle, taking into account the thickness of the A-post, this corresponds in practice to approximately half of the mirror surface. In other words, half of the mirror surface is situated in front of the windscreen.

The mirror described above can have all the special technical features which are known in the prior art. This applies both to materials and to designs. Examples of such technical features are: being electrically operable from the inside, the presence of heating, being capable of being folded away and the like.

The invention also relates to a vehicle, having a mirror assembly comprising a standard rear-view mirror, a width mirror and a mirror as described above.

The invention will be explained in greater detail below with reference to the exemplary embodiments shown in the drawing, in which:
Fig. 1 shows diagrammatically in side view a vehicle provided with a mirror according to the invention, in which the range of vision is shown diagrammatically;
Fig. 2 shows the vehicle according to Figure 1 provided with a mirror according to the invention, in front view;
Fig. 3 shows a detail of Fig. 2 on an enlarged scale; and
Fig. 4 shows in top view the range of vision provided by the various mirrors according to Fig. 2.

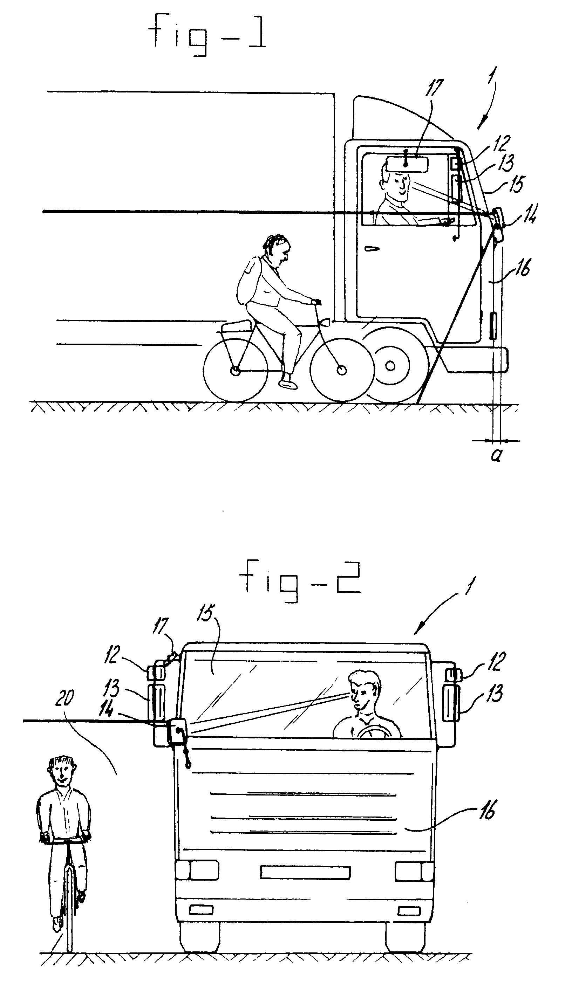

A vehicle is shown in its entirety by 1 in Figure 1. This vehicle is provided with the usual rear-view mirrors, which are width mirrors 12, standard rear-view mirror 13 and pavement mirror 17, which are fitted on a bar attached to the front door and also to the vehicle door. The driver looks in the mirrors 12, 13 and 17 concerned through the side window.

In addition, a mirror 14 is fitted. This mirror is fitted a short distance in front of the front side of the body 16 at the level of the lower dividing line between body and windscreen 15. The distance between the front side of the body 16 and the reflecting surface of the mirror 14 is indicated by 'a', and preferably lies between 3 and 20 cm, and more particularly between 5 and 14 cm.

The vehicle is shown in front view in Figure 2. This vehicle is provided with conventional side mirrors 12, 13, while the mirror is indicated by 14. The windscreen is indicated by 15, and the body by 16.

From a comparison of Figures 1 and 2 it can be seen how the image of the cyclist illustrated in Figure 1 can be seen by the driver of the vehicle. The driver looks through the windscreen by way of the mirror 14 at what is alongside him.

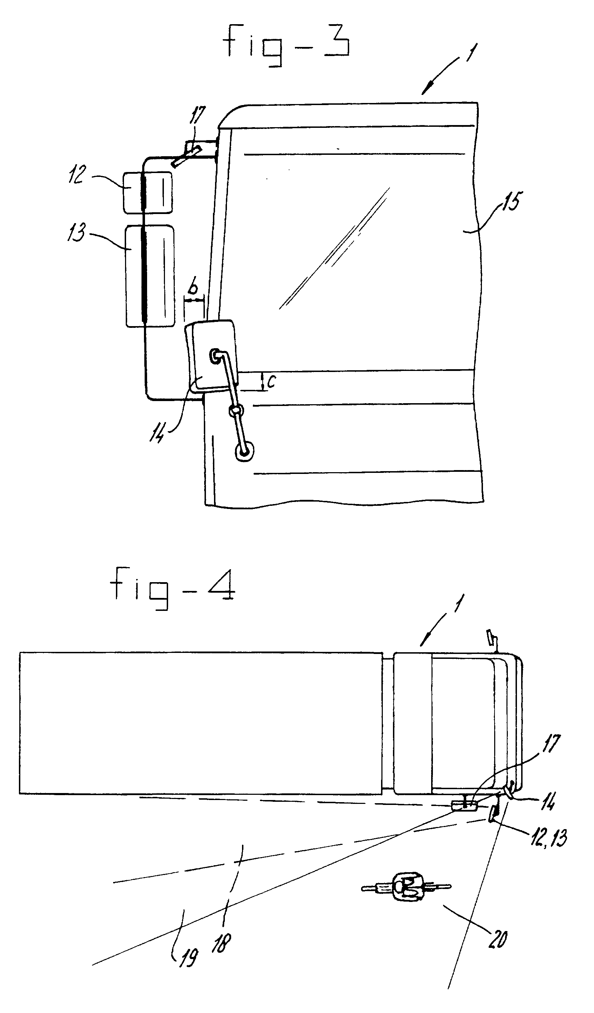

Fig. 3 gives the distances 'b' and 'c'. 'b' corresponds to the part of the mirror surface which extends outside the boundary of the vehicle. This can be, for example, 5 cm if the total width of the mirror is 15 cm, in other words, approximately one third of the width of the mirror. According to an advantageous embodiment of the invention, approximately half of the mirror projects beyond the vehicle body, and half lies within it.

'c' indicates the amount in height by which the bottom edge of the mirror surface is situated below the lower boundary between windscreen and body, in other words, below the windscreen when viewed in the vertical direction. This amount is at least a quarter of the total height of the mirror.

If the mirror is a total height of 23 cm, this value will be, for example, approximately 6 cm.

Figure 4 shows diagrammatically by 18 and 19 the range of vision provided by the conventional mirrors 12, 13, 17. It can be seen that there is a considerable area which is not covered by these mirrors. Area 20 is covered by using the mirror 14 according to the invention. The now remaining part not covered by the mirrors is so short that for cyclists in particular the danger of no longer being seen by the driver is minimized. For, by looking directly out through the windscreen, the driver can see the front of the bicycle if the cyclist is outside, i.e. in front of, area 20.

Although it will be understood that the problem to which the invention offers a solution is important particularly in the case of relatively high vehicles, the mirror can also be used in the case of slightly lower vehicles such as delivery vans and other categories of vehicle. A considerable increase in traffic safety can be obtained with the mirror according to the invention.

It will be understood that the mirror shown here can comprise any mirror known in the prior art. Only the position of the mirror relative to the body of the vehicle is important for the invention. For instance, the mirror 14 will preferably be convex, aspherical or spherical.

## Claims

1. Vehicle (1), the front side of which comprises the windscreen (15) of the driver's cab, which vehicle is provided with an externally fitted rear-view mirror (14), more particularly a blind-spot mirror, which mirror is fitted in such a way that the driver of the vehicle can look in said mirror through the windscreen of the vehicle, and the mirror surface extending in front view beyond the body of the vehicle, **characterized in that** the bottom edge of the mirror surface is situated on or below the lower boundary between windscreen and body, seen in front view and **in that** part of the mirror surface of the mirror (14) is situated within the boundary of the vehicle seen in front view.

2. Vehicle according to claim 1, in which the mirror surface of said mirror is fitted in front of the windscreen at a distance (a) of 3-20 cm from the front side of the body (16).

3. Vehicle according to one of the preceding claims, in which approximately half of the mirror surface is situated inside the boundary of the vehicle and approximately half projects beyond it.

4. Vehicle according to one of the preceding claims, in which the mirror surface is curved in the vertical direction.

5. Vehicle according to one of the preceding claims, in which the bottom edge of the mirror surface is situated approximately one quarter of the total height of the mirror below the lower boundary between body and windscreen.

6. Vehicle according to one of the preceding claims, in which said mirror is spherical or aspherical.

7. Vehicle according to one of the preceding claims further comprising a standard rear-view mirror (13) and a width mirror (12).

8. Vehicle according to claim 7, further comprising a pavement mirror (17).

## Patentansprüche

1. Fahrzeug (1), dessen Vorderseite eine Windschutzscheibe (15) einer Fahrerkabine aufweist, welches Fahrzeug mit einem außen angebrachten Rückspiegel (14), insbesondere einem Spiegel für den toten Winkel, ausgestattet ist, welcher Spiegel derart angebracht ist, dass der Fahrer des Fahrzeugs durch die Windschutzscheibe des Fahrzeugs in den Spiegel blicken kann und sich die Spiegelfläche in einer Frontansicht über den Körper des Fahrzeugs hinaus erstreckt, **dadurch gekennzeichnet, dass** der untere Rand der Spiegelfläche auf oder unterhalb der unteren Grenze zwischen der Windschutzscheibe und dem Körper, betrachtet in einer Frontansicht, gelegen ist, und dass ein Teil der Spiegelfläche des Spiegels (14) innerhalb der Grenze des Fahrzeugs, betrachtet in einer Frontansicht, gelegen ist.

2. Fahrzeug nach Anspruch 1, bei welchem die Spiegelfläche des Spiegels vor der Windschutzscheibe in einem Abstand (a) von 3 bis 20 cm von der Seite des Körpers (16) angebracht ist.

3. Fahrzeug nach einem der vorhergehenden Ansprüche, bei welchem näherungsweise die Hälfte der Spiegelfläche innerhalb der Grenze des Fahrzeugs gelegen ist und näherungsweise die Hälfte über diese hinaussteht.

4. Fahrzeug nach einem der vorhergehenden Ansprüche, bei welchem die Spiegelfläche in der vertikalen Richtung gekrümmt ist.

5. Fahrzeug nach einem der vorhergehenden Ansprüche, bei welchem der untere Rand der Spiegelfläche näherungsweise ein Viertel der Gesamthöhe des Spiegels unterhalb der unteren Grenze zwischen Körper und Windschutzscheibe gelegen ist.

6. Fahrzeug nach einem der vorhergehenden Ansprüche, bei welchem der Spiegel sphärisch oder asphärisch ist.

7. Fahrzeug nach einem der vorhergehenden Ansprüche, ferner mit einem Standardrückspiegel (13) und einem Breitenspiegel (12).

8. Fahrzeug nach Anspruch 7, ferner mit einem Straßenspiegel (17).

## Revendications

1. Véhicule (1) dont le côté avant comprend le pare-brise (15) de la cabine du conducteur, lequel véhicule est pourvu d'un miroir rétroviseur (14) placé à l'extérieur, plus particulièrement un miroir à angle mort, lequel miroir est placé de telle sorte que le conducteur du véhicule peut regarder dans le miroir à travers le pare-brise du véhicule, et la surface du miroir s'étendant en vue avant au delà de la carrosserie du véhicule, **caractérisé en ce que** le bord inférieur de la surface du miroir est située sur ou sous la limite inférieure entre le pare brise et la carrosserie, vu en vue avant et **en ce qu'**une partie de la surface de miroir du miroir (14) est située dans la limite du véhicule vu en vue avant.

2. Véhicule selon la revendication 1, dans lequel la surface de miroir dudit miroir est placée devant le pare-brise à une distance (a) de 3 à 20 cm du côté avant de la carosserie (16).

3. Véhicule selon l'une des revendications précédentes, dans lequel environ la moitié de la surface de miroir est située à l'intérieur de la limite du véhicule et environ la moitié se projette au-delà.

4. Véhicule selon l'une des revendications précédentes, dans lequel la surface du miroir est incurvée dans la direction verticale.

5. Véhicule selon l'une des revendications précédentes, dont le bord inférieur de la surface du miroir est situé environ un quart de la hauteur totale du miroir en dessous de la limite inférieure entre la carosserie et le pare-brise.

6. Véhicule selon l'une des revendications précédentes, dans lequel ledit miroir est sphérique ou asphérique.

7. Véhicule selon l'une des revendications précédentes, comprenant de plus un miroir rétroviseur classique (13) et un miroir grand-angle (12).

8. Véhicule selon la revendication 7, comprenant de plus un miroir de trottoir (17).
